Europäisches Patentamt

European Patent Office

Office européen des brevets

(19)

(11) **EP 0 855 422 B1**

(12) **EUROPÄISCHE PATENTSCHRIFT**

(45) Veröffentlichungstag und Bekanntmachung des
Hinweises auf die Patenterteilung:
**23.05.2001  Patentblatt 2001/21**

(51) Int Cl.⁷: **C08K 3/30**, C08L 23/06
// (C08L23/06, C08K3:30)

(21) Anmeldenummer: **98101359.2**

(22) Anmeldetag: **27.01.1998**

(54) **Schallgedämmtes Kunststoffrohrteil zum Fördern von Flüssigkeiten**

Plastic pipe part with sound-proofing properties suitable for transporting liquids

Elément tubulaire en matière plastique insonorisante pour le transport de liquides

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **27.01.1997  DE 19702952**

(43) Veröffentlichungstag der Anmeldung:
**29.07.1998  Patentblatt 1998/31**

(73) Patentinhaber: **GEBERIT TECHNIK AG
8645 Jona (CH)**

(72) Erfinder: **Weber, Peter
8645 Jona (CH)**

(74) Vertreter: **Zipse + Habersack
Wotanstrasse 64
80639 München (DE)**

(56) Entgegenhaltungen:
**EP-A- 0 254 375          GB-A- 2 070 626
US-A- 4 430 468**

Bemerkungen:
Die Akte enthält technische Angaben, die nach dem
Eingang der Anmeldung eingereicht wurden und die
nicht in dieser Patentschrift enthalten sind.

**Beschreibung**

Die Erfindung betrifft ein schallgedämmtes Kunststoffrohrteil aus einem thermoplastischen Material, nämlich Polyethylen, und einem Bariumsulfat-Füller, zum Fördern von Flüssigkeiten, insbesondere in Abwasser-Hausinstallationen.

Aus EP-B2-0 254 375 ist ein solches extrudiertes oder spritzgeformtes Kunststoffrohrteil mit schalldämmenden Eigenschaften, geeignet zum Fördern von Flüssigkeiten in Abwasserrohrsystemen bekannt. Als geeignetes thermoplastisches Material ist Polyvinylchlorid hervorgehoben. Ein im Handel befindliches, nach dem genannten EP Patent gefertigtes Kunststoffrohrteil wendet Polypropylen als thermoplastisches Material an. Als weitere geeignete thermoplastische Materialien sind in genannter Druckschrift Polyolefine wie Polyethylen genannt.

Zur Erzielung der angestrebten schalldämmenden Eigenschaften wird es in EP-B2-0 254 375 als wesentlich angesehen, das Verhältnis aus thermoplastischem Material und Bariumsulfat-Füller so einzustellen, daß eine Dichte von 1,8-2,7 g/cm$^3$ erreicht wird.

Das beschriebene, bekannte Kunststoffrohrteil befriedigt hinsichtlich seiner schalldämmenden Eigenschaften. Es ist aber nicht oder nur bedingt schweißbar, so daß eine teure Verbindungstechnik mit Übergangsstücken erforderlich ist.

EP-A1-0 365 835 beschreibt einen mehrschichtigen, als Rohr ausgebildeten Kunststoffkörper mit einer Innenschicht z. B. aus HDPE (High Density Polyethylen) und einer Außenschicht aus demselben HDPE. Die dazu koextrudierte Mittelschicht besteht aus einem thermoplastisch verarbeitbaren, synthetischen Elastomer, welches mit einem Füllstoff aus Bariumsulfat versehen ist. Diese Mittelschicht mit einer höhreren Dichte und Elastizität als die Innen- und die Außenschicht soll dem mehrschichtigen Kunststoffkörper eine ausgezeichnete schalldämmende Wirkung verleihen. In der genannten Druckschrift wird angegeben, daß aus dem mehrschichtigen Kunststoffkörper gebildete Rohre durch Stumpfschweißung direkt miteinander verbunden werden können, wodurch eine durchgehend wirksame Schalldämmschicht erhalten wird. Nachteilig an dem bekannten, mehrschichtigen Kunststoffkörper ist, daß auch hier die Verbindungstechnik aufgrund des mehrschichtigen Aufbaus des Kunststoffkörpers aufwendig und schwierig zu bewerkstelligen ist.

Der Erfindung liegt die Aufgabe zugrunde, ein schweißbares Einschichtrohr mit guten schalldämmenden, mechanischen, thermischen und chemischen Eigenschaften zu schaffen. Da es sich um ein Einschichtrohr handelt, soll eine einfache und kostengünstige Herstellung und eine gute Verarbeitbarkeit mit einfacher Verbindungstechnik gewährleistet sein. Schließlich soll das zu schaffende Kunststoffrohrteil kompatibel mit bisherigen PE-Systemen sein.

Die gestellte Aufgabe wird mit einem schallgedämmten Kunststoffrohrteil gelöst, wie es durch den Anspruch 1 gekennzeichnet ist. Vorteilhafte Ausführungen beschreiben die Unteransprüche.

Das erfindungsgemäße, schallgedämmte Kunststoffrohrteil vereinigt in sich hohe Schalldämmung mit guter Schweißbarkeit, ausreichender Steifigkeit und Langzeithaltbarkeit. Es setzt sich aus einem ausgewählten Polyethylen und einem ausgewählten Bariumsulfat-Füller zusammen, wobei das Mischungsverhältnis so gewählt ist, daß die Dichte des Kunststoffrohrteils im Bereich 1,5-2,1 g/cm$^3$ liegt.

Als ein geeignetes Polyethylen, das auch in Vermischung mit dem Bariumsulfat-Füller, in einem Verhältnis zur Erzielung der erwünschten Schalldämmung, eine gute Schweißbarkeit hat, hat sich ein PE 50-100 und insbesondere ein PE 80 nach EN/ISO 12 162 erwiesen, mit

- einer Dichte von 0,930-0,958 g/cm$^3$,

- einer mittleren Molmasse *Mw* von 110 000-220 000,

- einer Molmassenverteilung $\frac{Mw}{Mn}$ von 3-20, und

- einer Kettenverzweigung von 3-12 je 1000 Ketten-C-Atome mit kurzen Seitenketten, wobei

- $M_w$ die mittlere Molmasse bezogen auf das Gewicht und

- $M_n$ die mittlere Molmasse bezogen auf die Anzahl der Moleküle bedeutet.

Ein bevorzugtes Polyethylen ist PE 80 (Haltbarkeit 50 Jahre bei einer Vergleichsspannung von 8N/mm$^2$) mit

- einer Dichte von 0,932-0,952 g/cm$^3$,

- einer mittleren Molmasse *Mw* von 110 000-200 000,

- einer Molmassenverteilung $\frac{Mw}{Mn}$ von 3-17, und

- einer Kettenverzweigung von 4-8 je 1000 Ketten-C-Atome mit kurzen Seitenketten.

Die genannten Kriterien haben sich als entscheidend für die Eignung eines Polyethylen für die vorliegende Anwendung erwiesen. Eine hohe Kettenverzweigung mit langen Seitenketten verbessert zwar die Schalldämmung, verringert aber die Steifigkeit und die Schweißbarkeit des Kunststoffrohrteils. Werden die Seitenketten zu lang, so wird das Polyethylen zu weich und wird der Kriechmodul bzw. die Steifigkeit des Rohrs nach DIN 19 537 Teil 2 nicht erreicht.

Als ein geeignetes Bariumsulfat, das bei dem für die erwünschte Schalldämmung erforderlichen Mischungsverhältnis die Schweißbarkeit des Kunststoffrohrteils nicht wesentlich beeinträchtigt, hat sich ein Bariumsulfat mit einer mittleren Korngröße D 50 (50% Wert) nach DIN 53 477 von 5-20 µm und mit einer minimalen Korngröße von 1 und einer maximalen Korngröße von 50 µm erwiesen. Ein solches Bariumsulfat wird zugemischt, um bevorzugt eine Dichte des Kunststoffrohrteils im Bereich 1,5-1,7 g/cm³ zu erreichen.

Das erfindungsgemäße schallgedämmte Kunststoffrohrteil eignet sich sowohl zur Elektromuffenschweißung als auch zur Stumpfschweißung, wobei jeweils eine stoffschlüssige Verbindung geschaffen wird mit einem Schweißfaktor >1 im Fall der Elektromuffenschweißung und einem Schweißfaktor >0,8 im Fall der Stumpfschweißung.

Als besonders geeignet für ein Kunststoffrohrteil mit dem gewünschten Eigenschaften hoher Schalldämmung, guter Schweißbarkeit, Steifigkeit und Langzeithaltbarkeit hat sich ein Polyethylen PE 80 erwiesen, mit

- einer Dichte von 0,952 g/cm³,

- einer mittleren Molmasse $Mw$ von 200 000,

- einer Molmassenverteilung $\frac{Mw}{Mn}$ von 10, und

- einer Kettenverzweigung von 7 je 1000 Ketten-C-Atome.

Bariumsulfat wurde in einer Menge eingemischt, daß die Dichte des Kunststoffrohrteils bei 1,7 g/cm³ lag.

## Patentansprüche

1. Schallgedämmtes Kunststoffrohrteil aus einem thermoplastischen Material, nämlich Polyethylen, und einem Bariumsulfat-Füller, zum Fördern von Flüssigkeiten, insbesondere in Abwasser-Hausinstallationen, dadurch **gekennzeichnet,** daß zur Vereinigung von hoher Schalldämmung, guter Schweißbarkeit, ausreichender Steifigkeit und Langzeithaltbarkeit

    a) ein Polyethylen PE 50-100 (nach EN/ISO 12 162) verwendet ist mit

    - einer Dichte von 0,930-0,958 g/cm³,

    - einer mittleren Molmasse $Mw$ von 110 000-220 000,

    - einer Molmassenverteilung $\frac{Mw}{Mn}$ von 3-20, und

    - einer Kettenverzweigung von 3-12 je 1000 Ketten-C-Atome mit kurzen Seitenketten,

    b) ein Bariumsulfat verwendet ist mit

    - einer mittleren Korngröße D 50 (nach DIN 53 477) von 5-20 µm, und
    - einer minimalen Korngröße von 1 und einer maximalen Korngröße von 50 µm,

    c) und daß die Dichte des Kunststoffrohrteils im Bereich 1,5-2,1 g/cm³ liegt.

2. Kunststoffrohrteil nach Anspruch 1, dadurch **gekennzeichnet,** daß ein Polyethylen verwendet ist mit

    - einer Dichte von 0,932-0,952 g/cm³,

    - einer mittleren Molmasse $Mw$ von 110 000-200 000,

    - einer Molmassenverteilung $\frac{Mw}{Mn}$ von 3-17, und

    - einer Kettenverzweigung von 4-8 je 1000 Ketten-C-Atome mit kurzen Seitenketten.

3. Kunststoffrohrteil nach Anspruch 1 oder 2, dadurch **gekennzeichnet,** daß die Dichte des Kunststoffrohrteils im Bereich 1,5-1,7 g/cm³ liegt.

4. Kunststoffrohrteil nach einem der Ansprüche 1 bis 3, dadurch **gekennzeichnet,** daß ein Polyethylen PE 80 verwendet ist mit

    - einer Dichte von 0,952 g/cm³,

    - einer mittleren Molmasse $Mw$ von 200 000,

    - einer Molmassenverteilung $\frac{Mw}{Mn}$ von 10, und

    - einer Kettenverzweigung von 7 je 1000 Ketten-C-Atome, und daß die Dichte des Kunststoffrohrteils bei 1,7 g/cm³ liegt.

## Claims

1. A noise-insulated plastics pipe part of a thermoplastics material, namely polyethylene, and a barium sulphate filler, for conveying liquids, more particularly in domestic waste piping systems, characterized in that to combine high noise-insulation, good weldability, adequate stiffness and a long service life

    a) a polyethylene PE 50-100 (as per EN/ISO 12 162) is used, featuring

- a density in the range 0.930 - 0.958 g/cm$^3$
- a mean mol mass *Mw* in the range 110,000 - 220,000,
- a mol mass distribution $\frac{Mw}{Mn}$ in the range 3 - 20 and
- a chain branching in the range 3 - 12 per 1,000 chain C atoms having short side chains,

b) a barium sulphate is used featuring

- a mean grain size D 50 (50% value) as per DIN 53 477 in the range 5 - 20 μm and
- a minimum grain size of 1 and a maximum grain size of 50 μm

c) and that the density of the plastics pipe part is in the range 1.5 - 2.1 g/cm$^3$.

2. The plastics pipe part as set forth in claim 1, characterized in that a polyethylene PE 80 is used featuring

- a density in the range 0.932 - 0.952 g/cm$^3$
- a mean mol mass *Mw* in the range 110,000 - 200,000,
- a mol mass distribution $\frac{Mw}{Mn}$ in the range 3 - 17 and
- a chain branching in the range 4 - 8 per 1,000 chain C atoms having short side chains.

3. The plastics pipe part as set forth in claim 1 or 2, characterized in that the density of the plastics pipe part is in the range 1.5 - 1.7 g/cm$^3$

4. The plastics pipe part as set forth in any of the claims 1 to 3, characterized in that a polyethylene PE 80 is used featuring

- a density of 0.952 g/cm$^3$
- a mean mol mass *Mw* of 200,000,
- a mol mass distribution $\frac{Mw}{Mn}$ of 10 and
- a chain branching of 7 per 1,000 chain C atoms and that the density of the plastics pipe part is 1.7 g/cm$^3$.

**Revendications**

1. Elément de tuyauterie en matière plastique, insonorisé, réalisé en un matériau thermoplastique, en particulier en polyéthylène, avec une charge de sulfate de baryum, pour le transport de liquides, en particulier dans des installations domestiques d'eaux usées, caractérisé en ce que pour allier un amortissement phonique élevé, une bonne soudabilité, une rigidité suffisante et une bonne tenue dans le temps

a). on utilise un polyéthylène PE 50-100 (selon norme EN/ISO 12 162) avec

- une densité de 0,930-0,958 g/cm$^3$,
- une masse molaire moyenne *Mw* de 110 000 - 220 000,
- une répartition de masse molaire *Mw*/*Mn* de 3-20 et
- une ramification de la chaîne de 3-12 pour 1000 atomes de carbone avec des chaînes latérales courtes,

b) on utilise un sulfate de baryum avec

- une dimension moyenne de grain D50 (selon DIN 53477) de 5 - 20 μm et avec
- une dimension minimale de grain de 1 et une dimension maximale de grain de 50 μm,

c) et en ce que la densité de l'élément de tuyauterie en matière plastique se situe dans la plage 1,5 - 2,1 g/cm$^3$.

2. Elément de tuyauterie en matière plastique selon la revendication 1, caractérisé en ce qu'on utilise un polyéthylène avec

- une densité de 0,932-0,952 g/cm$^3$,
- une masse molaire moyenne *Mw* de 110 000 - 200 000,
- une répartition de masse molaire *Mw*/*Mn* de 3-17 et
- une ramification de la chaîne de 4-8 pour 1000 atomes de carbone avec des chaînes latérales courtes.

3. Elément de tuyauterie en matière plastique selon la revendication 1 ou 2, caractérisé en ce que la densité de l'élément de tuyauterie en matière plastique est située dans la plage de 1,5 - 1,7 g/cm$^3$.

4. Elément de tuyauterie en matière plastique selon une des revendications 1 à 3, caractérisé en ce qu'on utilise un polyéthylène PE 80 avec

- une densité de 0,952 g/cm$^3$,
- une masse molaire moyenne *Mw* de 200 000,
- une répartition de masse molaire *Mw*/*Mn* de 10 et
- une ramification de la chaîne de 7 pour 1000 atomes de carbone et en ce que la densité de l'élément de tuyauterie en matière plastique est

**EP 0 855 422 B1**

de 1,7 g/cm$^3$.